# EUROPEAN PATENT SPECIFICATION

(11) **EP 3 895 868 B1**
(45) Date of publication and mention of the grant of the patent: **03.09.2025**
(21) Application number: 19896865.3
(22) Date of filing: 04.12.2019
(51) Int. Cl.: B29C 35/02, B29C 70/88

(54) **METHOD, CONTROL DEVICE AND COMPUTER PROGRAM PRODUCT FOR THE CURING OF A COMPOSITE PART**
VERFAHREN, STEUERUNGSVORRICHTUNG UND COMPUTERPROGRAMMPRODUKT ZUR HÄRTUNG EINES VERBUNDTEILS
PROCÉDÉ, DISPOSITIF DE COMMANDE ET PRODUIT DE PROGRAMME INFORMATIQUE POUR LE SÉCHAGE D'UNE PIÈCE DE COMPOSITE

(30) Priority: 14.12.2018 ES 201831216
(43) Date of publication of application: 20.10.2021
(73) Proprietor: Universidade da Coruña, 15071 A Coruña (ES)
(72) Inventor: LÓPEZ BECEIRO, Jorge José, 15403 FERROL (ES); FERNÁNDEZ PÉREZ, Enrique, 15006 A CORUÑA (ES); GÓMEZ BARREIRO, Silvia, 15010 A CORUÑA (ES); ARTIAGA DÍAZ, Ramón Pedro, 15403 FERROL (ES)
(74) Representative: ZBM Patents - Zea, Barlocci & Markvardsen
(86) International application number: PCT/ES2019/070828
(87) International publication number: WO 2020/120813

(56) References cited:
- WO-A1-2018/077482
- WO-A1-2018/077482
- US-A- 4 385 957
- US-A- 6 146 576
- US-A- 6 146 576
- US-A1- 2016 059 449

## Description

The present description relates to a method for curing a composite part. The present description further relates to a device and a computer program suitable for carrying out the method.

### BACKGROUND

The curing of a composite part of high-performance, especially for the aeronautical industry, is normally performed in autoclaves. This requires long times of heating and high power consumption mainly due to the huge mass of the autoclave to be heated, and to the fact that the transfer of heat to the sample is performed by convection, which is relatively inefficient.

A limitation of heating through autoclave is that it may cause gradients of temperature in the part because, although the external heating is applied uniformly, the reaction heat of the curing may cause local overheating in thicker areas of the part if relatively fast programmes of heating are used. Temperature differences during the curing produce multiple defects: different degrees of curing in different parts of the composite part, shrinkage, deformation, warping and surface defects of the moulded composite parts.

An alternative to avoid these problems would be the use of Joule effect curing, in theory more power efficient than autoclaves or any external heating system. However, none of the current techniques based on the Joule effect heating allows effectively regulating the temperature throughout the part to avoid local overheating. This means that it is not widely used industrially.

More specifically, the methods proposed to implement curing by Joule effect in general do not solve the problem of temperature control throughout the whole mass. For example, there are methods that allow measuring the temperature on the whole surface of the composite part but do not allow controlling the temperature in each part of the composite part *([Direct electrical cure of carbon fibre composites. https:*//*www.google.es*/*url?sa=t&source=web&rct=j&url=https:*//*www.tandfonline.com*/ *doi*/*pdf*/*10.1179*/*2055035915Y.0000000001&ved=2ahUKEwi0nu6EuO3dAhVmx4UK HWikC_oQFjANegQIBxAB&usg=AOvVaw3S88ejfn0mIVn75PtQi3TI]*)*.* There are also known methods that allow temperature control at various points using thermocouples *([Final degree project UC3M. https:*//*e-archivo.uc3m.es*/*bitstream*/*handle*/*10016*/*22745*/*PFC_santiago_mata_pastrana_2014 .pdf?sequence=1&isAllowed=y]*). In addition, there are also known methods that allow a global view and that theoretically could provide global control. However, these methods perform laminate layers heating (Chinese patent application CN107662303A: titled *"Comprehensive electrical loss curing method of carbon fibre reinforced resin-based composite material*")*,* which does not allow a precise control at areas of the composite part, since a uniform application of power in a whole layer normally produces overheating in the central areas of the laminates. Some methods may use alternating current and PWM (Pulse Width Modulation) over alternating current.

Document WO 2018/077482 A1 discloses a method for curing a composite part, the composite being reinforced at least in part with conductive fibres distributed throughout the composite part.

Consequently, there is a need for a device that at least partially solves the problems mentioned above.

### SUMMARY

In accordance with a first aspect, a method for curing a composite part according to claim 1 is provided

In this way, this curing method by Joule effect achieves a more homogeneous and more economical result than with known processes. More specifically, with the described method it is achieved, depending on the distribution of temperatures obtained at different times over the curing time (for example, at every time of the curing time), independently regulating the power that is supplied through each of the bundles of conductive fibres, to precisely follow the programme of temperatures (as a function of time) throughout the composite part, i.e. the method allows distributing selectively and in a controlled manner the required electrical power at different times over the curing time through each electrically connected bundle of conductive fibres, so that the established programme of temperatures is kept in all the areas of the composite part. Thus, the temperature is controlled throughout the volume of the part and throughout the curing cycle, thereby achieving a uniformity of temperatures while keeping a programme of temperatures for the whole part, which may be based on a heating, followed by isothermal and finally a linear cooling ramp.

At this point it is important to note that all or only some of the bundles of conductive fibres may be connected to a power source. Even, among those that are connected, it is possible that some of them may not be active (i.e. no power is supplied thereto) at some or all times of the curing time.

In the case of laminated composites, each layer of the laminate may be divided into several bundles and it is actuated on each bundle independently. It is not necessary for the composite to have all the layers of conductive fibres, nor it is always necessary to actuate on all the layers. It basically depends on the thickness and on the geometry of each part to be moulded. The method is also applicable to non-laminated composites reinforced with conductive fibres, e.g. composites obtained by filament winding, or manual or automatic fibre placement.

In a first scenario, at least some of the conductive fibres are grouped in at least two bundles and each bundle may be connected to a different power source. In this case, depending on the result of the verification, regulating, at different times over the curing time, by the control device, the power supplied by the power source to at least one bundle of conductive fibres of the at least one bundle of conductive fibres that is electrically connected to the power source, may comprise:
- independently regulating, at different times over the curing time, by the control device, the power supplied by the power source to the bundle of conductive fibres to which it is electrically connected.

In this first scenario, each bundle (although not necessarily all the bundles that are present in the part) is connected to a different power source, so that the regulation of the power supply to the bundle is performed by the control device on the corresponding power source.

In a second scenario, at least one bundle of conductive fibres may be electrically connected to the power source and, through an actuator element, to an interface device. In this case, depending on the result of the verification, regulating, at different times over the curing time, by the control device, the power supplied by the power source to at least one bundle of conductive fibres of the at least one bundle of conductive fibres that is electrically connected to the power source, may comprise:
- regulating, at different times over the curing time, by the control device and through the interface device, the power supplied by the power source to at least one bundle of conductive fibres of the at least one bundle of conductive fibres that is electrically connected to the power source, by actuating on the corresponding actuator element.

In this second scenario, the power source is the same for all the bundles and the regulation of the power supply is performed by the interface device (which is in turn controlled by the control device) through the actuator element of the corresponding bundle.

On the other hand, regulating, at different times over the curing time, by the control device and through the interface device, the power supplied by the power source to at least one bundle of conductive fibres of the at least one bundle of conductive fibres that is electrically connected to the power source, by actuating on the corresponding actuator element, may comprise:
- regulating, at different times over the curing time, by the control device and through the interface device, the power supplied by the power source to at least one bundle of conductive fibres of the at least one bundle of conductive fibres that is electrically connected to the power source, by actuating on the corresponding actuator element, by opening and closing the power supply to the bundle of conductive fibres, to generate pulses of controlled duration.

Thus, to achieve this regulation, the interface device may provide PWM (Pulse Width Modulation) signals.

In some examples, an actuator element may comprise at least one of the following elements: a transistor; an on-off element of high, medium or low frequency.

In accordance with some examples, the method may further comprise calibrating the control device. This calibration may comprise:
- applying, by the control device, electrical stimuli sequentially to each bundle of conductive fibres electrically connected to the power source;
- identifying, by the control device and through the temperature capturing device, rises of temperature on the areas of the surface of the composite part under the influence of the conductive fibres that have received the power supply.

This calibration is only necessary in the case that the detail of the path of the conductive fibres reinforcing the composite are not known. In the case that the trajectories are known (in general, it may also depend on the method described and on the control parameters used by the method, which normally depend on the size, geometry and constitution of the material), it is possible to perform the curing of the composite part at the programmed speed, from the very first moment.

In accordance with a second aspect, a computer program is provided. This computer program may comprise program instructions for causing a control device to perform or execute a method for curing a composite part, such as the one described before. The computer program may be stored in a physical storage medium, such as a recording medium, a computer memory, or a read-only memory, or may be carried by a carrier wave, such as electrical or optical.

In accordance with another aspect, a control device for controlling a system for curing a composite part according to claim 8 is provided.

In accordance with yet another aspect that does not fall within the scope of the claims, a control device for controlling a system for curing a composite part is provided. The composite may be reinforced at least in part with conductive fibres distributed throughout the composite part. At least some of the conductive fibres may be grouped in at least one bundle. At least one bundle of conductive fibres may be electrically connected to a power source. The control device may be configured to:
- obtaining a programme of temperatures to be applied to the composite part for curing thereof;
- obtaining, through a temperature capturing device, a distribution of temperatures on the surface of the composite part, at different times over the curing time;
- verify the correspondence between the obtained distribution of temperatures on the surface of the composite part and the obtained programme of temperatures to be applied;
- depending on the result of the verification, regulate, at different times over the curing time, by the control device, the power supplied by the power source to at least one bundle of conductive fibres of the at least one bundle of conductive fibres that is electrically connected to the power source.

In accordance with another aspect that does not fall within the scope of the claims, a control device for controlling a system for curing a composite part is provided. The composite may be reinforced at least in part with conductive fibres distributed throughout the composite part. At least some of the conductive fibres may be grouped in at least one bundle. At least one bundle of conductive fibres may be electrically connected to a power source. The control device may comprise a memory and a processor, wherein the memory stores computer program instructions executable by the processor, the instructions comprising functionalities for executing a method for curing a composite part, such as the one described before.

In accordance with another aspect, a system for curing a composite part according to claim 9 is provided

In some examples, when the system comprises a single power source, it may comprise an interface device for regulating the power supply to at least one bundle of conductive fibres that is electrically connected to the power source, the interface device being connected to the control device and to the power source. With reference to the connection of the power source to the control device, it is optional. If this connection is not performed, the source may function with, for example, a fixed voltage and the interface device may be in charge of the duration of the pulses. If the connection is performed, there exists the possibility that the control device can actuate on the voltage provided by the source (if the source allows it), as well as to monitor its operation.

In some examples, the system may comprise more than one power source, one for each fibre bundle. There is also the possibility that several bundles are connected to a same source and other bundles are individually connected to other sources.

In accordance with some examples, the interface device may comprise a channel for each fibre bundle to which it is connected. Thus, each channel corresponds to a bundle and the set of channels is controlled by the interface device, which is in turn controlled by the control device. With this, it is possible to regulate the power that is applied through different channels, i.e. it is possible to regulate the power that is supplied to each bundle of conductive fibres. In any case, the way to regulate the power supplied may be by opening and closing the passage of power (for example, passage of current) through each of the channels independently. In this way, duration-controlled current pulses (PWM) are obtained. The duration of the pulses may be set in a range as wide as the interface device and actuator elements allow, that may easily range from milliseconds or microseconds to continuous pulse.

To regulate this power supply by the interface device, the system may comprise an actuator element for each channel of the interface device, each actuator element being electrically connected to the power source and to the corresponding channel of the interface device.

On the other hand, the power source may comprise a current source which is selected from at least one of a source of alternating current; a source of direct current.

In addition, in accordance with some examples, the temperature capturing device may comprise at least one thermographic, thermal or infrared camera.

Other objects, advantages and features of embodiments of the invention will become apparent to the skilled person from the description, or may be learned by practice of the invention.

### BRIEF DESCRIPTION OF THE DRAWINGS

In the following, particular embodiments of the present invention will be described by way of non-limiting example, with reference to the attached drawings, in which:
Figure 1 shows a block diagram of a system for curing a composite part, in accordance with some examples.
Figure 2 shows a schematic diagram in detail of a composite part connected to a pair of electrodes per channel, in accordance with some examples.
Figure 3 shows a schematic diagram of a composite part connected to a single pair of electrodes, in accordance with the state of the art, as well as a graphical representation of the programmed profile of temperatures over time and the temperatures obtained at the points of reference on the surface of the composite part.
Figure 4 shows a schematic diagram of a composite part connected to a pair of electrodes per channel, in accordance with some examples; a graphical representation of the programmed profile of temperatures over time and the temperatures obtained at the points of reference on the surface of the composite part; and a graphical representation of the average current flowing through each of the channels at every time.

### DETAILED DESCRIPTION OF EMBODIMENTS

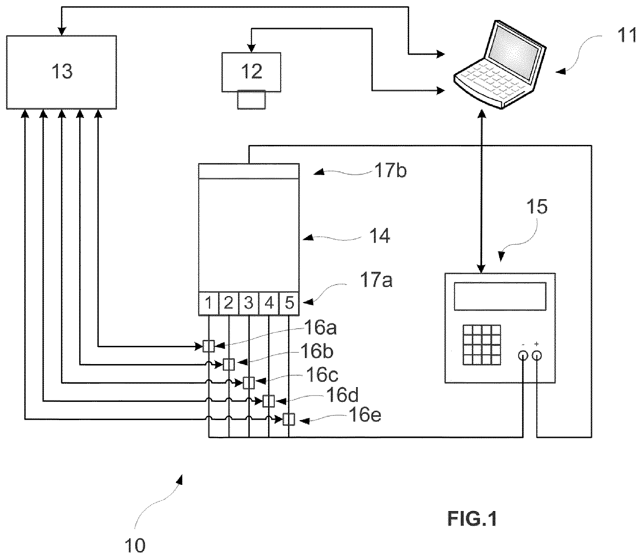

In Figure 1 it is shown a system 10 for curing a composite part 14. The composite part to be cured is reinforced at least in part with conductive fibres 20 distributed in a suitable manner throughout the composite part. At least some of these conductive fibres may be grouped in bundles 21a to 21e. Although two fibres per bundle are shown in Figure 1, in reality any number, typically thousands of fibres in each bundle, may be considered. "Suitable distribution" may mean that the conductive fibres are distributed in the composite part in such a way that they cover practically the whole extension of the part, so that there are no areas of the part that are too far away from the conductive fibres. For example, in a rectangular composite part of 800 mm x 400 mm, with a thickness of 4 mm, it is possible to place a unidirectional sheet of conductive fibres of 800 mm x 400 mm passing through the middle plane. In this way, no area of the composite part is more than 2 mm away from any conductive fibre. The criterion for deciding when an area is too far away from the fibres is not strict and depends on the type of part. The distance to the fibres of a non-fibre area may be considered to be excessive when, to maintain the temperature difference within the preset values, the curing cycle of the composite part has to be extended to the point where it is no longer economically profitable.

In accordance with some examples, the system 10 for curing a composite part 14 may comprise the following elements, as may be seen in Figure 1:
- A control device 11 for controlling the operation of the different elements that make up the system 10;
- A capturing device 12 for capturing temperatures on the surface of the composite part 14;
- An interface device 13 for controlling the power supply to the different bundles 21a to 21e of conductive fibres 20 arranged in the composite part 14;
- A power source 15 for supplying power to each of the bundles 21a to 21e of conductive fibres 20;
- An actuator element 16 for each bundle of conductive fibres 20.

With respect to the control device 11, it may be implemented in a fully computerised or fully electronic configuration or a combination of both.

In the case where the control device 11 is purely computer based, it may be, for example, any computer system, such as a server, a desktop or laptop computer or any other portable device, such as a tablet or a smartphone. Accordingly, the control device may comprise a memory and a processor (for example, a microprocessor), wherein the memory stores computer program instructions that are executable by the processor, these instructions comprising functionalities to execute a method for curing a composite part, whose method will be described later.

The described memory may be comprised in the processor or may be external. In the case it is internal, the memory may be, for example, an EEPROM memory. In the case it is external, the memory may be, for example, data storage media such as magnetic disks (for example, hard disks), optical disks (for example, DVD or CD), memory cards, flash memories (for example, pen drives) or solid state drives (RAM based SSDs, flash based SSDs, etc.).

On the other hand, these storage media may be part of the control device itself and/or may be arranged remotely with respect to it, connected wired or wirelessly. In the case of a wired communication, the connection may be made through serial ports, such as USB, micro USB, mini USB, Firewire or Ethernet. In the case of wireless communications, the connection may be made, for example, through short range wireless communication modules, e.g. Bluetooth, NFC, Wifi, IEEE 802.11 or Zigbee, or even through an Internet of Things (IoT) communications network (for example, LoRA or Sigfox). If the communications are long range, the connection may be made through communication modules based on, for example, GSM, GPRS, 3G, 4G, 5G or satellite technology (for example, if the communication is through a global communications network, such as the Internet). The use of fibre optic or ADSL communications is also possible. In any case, if the storage media are arranged remotely, the communication established between the control device 11 and the storage media may be secured by, for example, username/password, cryptographic keys and/or by an SSL tunnel established in the communication between the control device 11 and the storage media.

Thus, the set of computer program instructions that are executable by the processor (such as a computer program) may be stored on physical storage media, such as the ones mentioned above, but it may also be carried by a carrier wave (the carrier medium may be any entity or device capable of carrying the program), such as electrical or optical, which may be transmitted through electrical or optical cable or by radio or other means. In this manner, when the software is contained in a signal that may be transmitted directly by a cable or other device or medium, the carrier medium may be made up of such a cable or other device or medium.

Alternatively, the carrier medium may be an integrated circuit in which the software is encapsulated (embedded), such integrated circuit being adapted to perform or to be used in the performance of the relevant methods.

The computer program may be in the form of source code, object code or code intermediate between source code and object code, such as in partially compiled form, or in any other form suitable for use in the implementation of the methods described.

With regard to the processor, it may be, for example, a microprocessor, such as an STM32F107VC from ST Microelectronics. This microprocessor contains an ARM Cortex M3 core at 72 MHz and is accompanied by a small EEPROM memory (i.e. the previously described memory is internal and corresponds to the M24512 model, also from ST Microelectronics), which allows storing data and also allows updating the microcontroller firmware from, for example, a personal computer, preferably through a USB or mini-USB port. The capacity of this memory is 512 Kbytes and it may communicate through I2C communication lines with the microcontroller.

Microcontroller firmware may be defined as the software that controls the behaviour of the control device 11, i.e. it may correspond to the set of computer program instructions that have been described above.

This microcontroller includes an internal EEPROM memory for storing the firmware. The hardware associated with the EEPROM memory consists only of two biasing resistors to boost the voltage of the I2C communication lines, which are directly connected to the microcontroller.

On the other hand, the control device 11 may have a purely electronic configuration and could therefore be formed by a programmable electronic device such as a CPLD (Complex Programmable Logic Device), an FPGA (Field Programmable Gate Array) or an ASIC (Application-Specific Integrated Circuit).

Based on what has been described above, the control device may make use of different types of integrated circuits, such as CPUs (Central Processing Units), microcontrollers, FPGAs (Field-Programmable Gate Arrays), CPLDs (Complex Programmable Logic Devices), ASICs (Application-Specific Integrated Circuits), SoCs (System-on-Chips) or PSoCS (Programmable SoCs). A CPU is normally flexible and powerful. Microcontrollers are less powerful than CPUs but offer much lower power consumption and may be easily reprogrammed. Regarding FPGAs and CPLDs, they may implement designs more efficiently and powerfully than a CPU, but, in general, the development of such designs is more complex than with CPUs and microcontrollers. With respect to ASICs, they are practically ad-hoc devices designed to solve very specific tasks, so they are very powerful and their power consumption may be optimised. However, the problem with ASICs is their development cost (almost always over a million euros), which means that these developments only pay off economically when a very large number of units of a product containing them are produced. Finally, SoCs and PSoCs often integrate a powerful microcontroller and several peripherals (for example, communications transceivers) in a same circuit, making them more powerful systems than many microcontrollers.

Finally, the control device 11 could also present a hybrid configuration between computing and electronics. In this case, the device could comprise a memory and a microcontroller to implement a part of its functionalities computationally, as well as certain electronic circuits to implement the rest of the functionalities.

Whatever its configuration, the control device 11 is intended to continuously monitor the temperature on the entire accessible surface of the composite part 14, to continuously generate (at different times over the curing time of the part, such as, for example, every instant) commands to actuate on the actuator elements and, optionally, the power source depending on the temperatures observed on each part of the surface of the composite part and also depending on the programmed temperatures, as well as to obtain a desired programme of temperatures to be applied to the composite part in order to achieve its curing. The obtaining of the programme of temperatures may be executed from a selection made from a plurality of programs of temperatures predetermined by, for example, an operator in charge of performing the curing or it may be automatically selected by the control device 11 from, for example, other data such as the size of the composite part, the composites that make up the composite part, etc. In addition, the desired programme of temperatures for curing may be manually inputted into the control device. In any of the cases described, based on the obtained programme of temperatures, the control device sends commands to the interface device 13, which actuates on the actuator elements 16, to regulate the passage of power. The system makes it possible to supply the power required in each of the bundles to follow the aforementioned programme of temperatures at all points on the surface of the composite part 14.

With respect to the capturing device 12 for capturing temperatures on the surface of the composite part 14, it may comprise at least one capturing sub-device, for example, at least one thermographic camera, also known as a thermal or infrared camera. The number of sub-devices (for example, the number of cameras) may be sufficient to cover the entire accessible surface of the composite part to be cured.

The temperature capturing device 12 is connected to the control device 11, so that, firstly, the control device may cause the temperature capturing device, at certain times over the curing time of the composite part 14, to capture the distribution of temperatures on the surface of the composite part. Secondly, for the control device 11 to obtain this distribution of temperatures captured by the temperature capturing device, for subsequent analysis. This obtaining of the distribution of temperatures may occur because it is taken by the control device itself (for example, the distribution of temperatures could be stored in a memory associated with the temperature capturing device, and the control device could access to said memory) or it may be supplied by the temperature capturing device to the control device.

With reference to the power source 15, it may be, for example, a direct current or alternating current source. This power source is connected to the control device 11, so that it may be activated during the method of curing the composite part 14. The control device may also be connected to the source to set the desired voltage and monitor the operation of the source. Furthermore, as may be seen in Figure 1, the power source is also connected between the two electrodes of each bundle 21a to 21e of conductive fibres 20, so as to be able to supply power to the bundle.

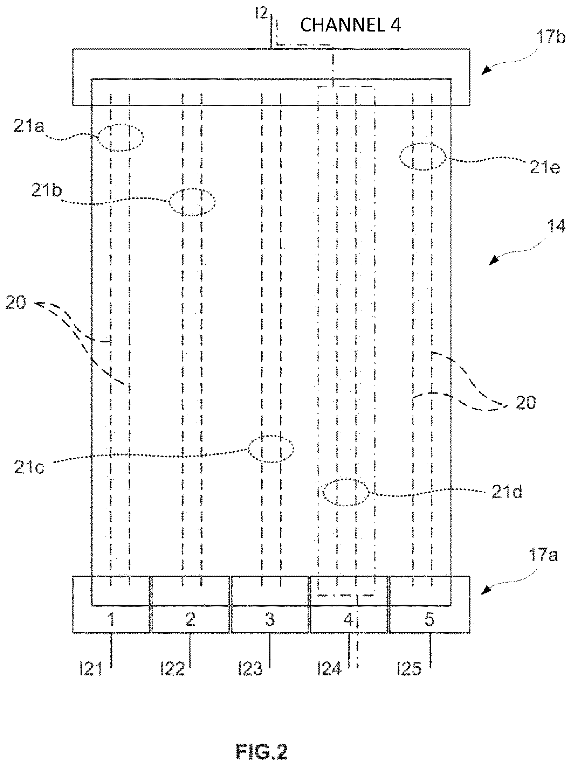

In the following, the configuration of the connection of the power source 15 to the composite part 14 is described based on Figure 2.

As may be seen in this figure, and as discussed above, the composite part 14 is reinforced with conductive fibres 20 along its surface. At least some of these conductive fibres may be grouped in bundles 21a to 21e. For each bundle (all or only some of the bundles may be connected, and even those that are connected may not be active at some or all times over the curing time), their ends may be connected by, for example, mechanical pressure, to metallic electrodes 17a,17b, so that each bundle of conductive fibres is connected to two electrodes. In this way, the electrodes connect the conductive fibres to the power source 15. In accordance with the example shown in Figure 2, a first bundle 21a of conductive fibres is connected, at one of its ends, to a first electrode 17b, while the other of its ends is connected to a second electrode 17a1. A second bundle 21b of conductive fibres is connected, at one of its ends, to the first electrode 17b, while the other of its ends is connected to the second electrode 17a2. And so on. Basically, it may be understood that the second electrode 17a comprises, in accordance with the example of Figure 2, five independent electrodes, although the number of electrodes will depend on the number of bundles to be connected.

Based on this described configuration, as may be seen in Figure 1, an actuator element 16a to 16e is intercalated between the power source 15 and each second electrode 17a1 to 17a5 of the corresponding bundle 21a to 21e. As discussed above, each actuator element is controlled by the interface device 13, which is in turn controlled by the control device 11. The interface device may therefore comprise one channel for each connected bundle (in Figure 2, it is distinguished as an example what may be considered the fourth channel 4 of the interface device, i.e. the one established between the first electrode 17b and the second electrode 17a4 of the corresponding bundle 21d).

In some examples, the interface device may have an electronic configuration. For example, an Arduino-Leonardo may be used, but any type of SBC (Single Board Computer) or electronic device in which it may be implemented may also be used.

An actuator element may be, for example, a transistor or a high, medium or low frequency on-off device, so as to allow regulating, for each pair of electrodes, the time of application of each current pulse (for example, PWM, Pulse Width Modulation), thereby regulating the power delivered to each bundle at different times over the curing time.

As discussed above, the actuator elements 16a to 16e are controlled by the interface device 13, which is in turn controlled by the control device 11. Thus, by actuating on each actuator element, the interface device 13, together with the power source 15 (for example, a direct current source), may act individually on each pair of electrodes according to commands received from the control device, based on the obtained distribution of temperatures on the surface of the composite part and the programme of temperatures, and regulate, for each pair of electrodes, the time of application of each current pulse, thus controlling the power delivered at different times of the curing time (for example, at every time during the curing time) to each bundle of conductive fibres. More specifically, the control device sends commands to the interface device, which actuates on the actuator elements, based on the commands received, to regulate the power delivery to each bundle. The system 10 thus makes it possible to supply the electrical power required in each of the bundles at each moment to follow the programme of temperatures at all points on the surface of the composite part, thus achieving that the temperature difference between any two points in the entire volume of the composite part is kept below a preselected value based on the measurements on the entire surface of the composite part and taking into account the thermal conductivity and thickness of the composite part. This maximum permissible temperature difference (i.e. the preselected value) between the different areas of the composite part may depend, for example, on the volume of the part and the mechanical and geometrical requirements of the part. Temperature difference values of between 3 and 15°C are applicable in many cases, although the obtaining of quality composite parts with other values cannot be ruled out.

Accordingly, the electrical power required at any given moment by each bundle of conductive fibres electrically connected is distributed selectively and in a controlled manner, so that the established programme of temperatures is kept in all areas of the composite part to be cured. The temperature is controlled throughout the volume of the composite part and during the entire curing cycle, thus achieving a uniformity of temperatures, while keeping a programme of temperatures for the whole composite part, typically heating, followed by isothermal and then a linear cooling ramp.

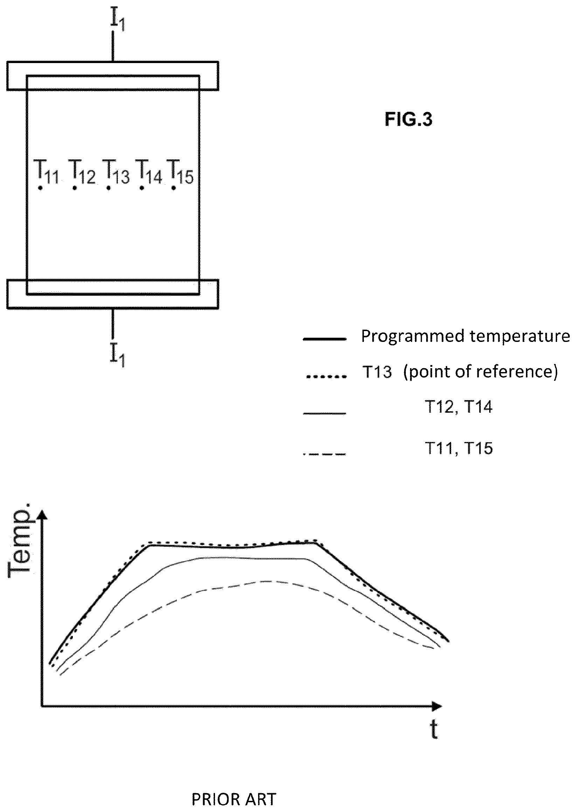

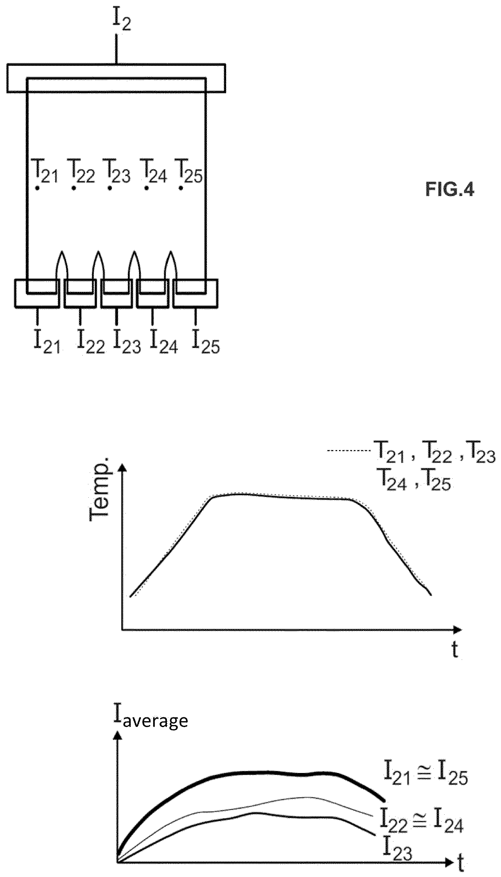

Figure 3 refers to a curing by heating with a single pair of electrodes (one channel), which is part of the prior art, while Figure 4 refers to a curing by heating with several channels (one of the electrodes is the same for all channels), as described above. In both cases, the composite part 14 has a rectangular laminate.

In Figure 3, current I₁ flows in the direction of the fibres (not shown). The point over which the control of temperature is applied is the central point T₁₃. With respect to Figure 4, current I₂ (I₂₁, I₂₂, I₂₃, I₂₄, I₂₅) also flows in the direction of the fibres (not shown) and a point of reference for control of temperature is used for each channel: T₂₁, T₂₂, T₂₃, T₂₄, T₂₅.

Both Figure 3 and Figure 4 show, at the top, a schematic diagram representing the arrangement of the electrodes on the composite part. In addition, each of these figures also shows a graphical representation of the programmed profile of temperatures over the curing time and the temperatures obtained at the points of reference on the surface of the composite part. From these graphical representations, it may be clearly seen that
- the distribution of temperatures is almost uniform on the five points when several channels are used;
- the distribution of temperatures varies as moving away from the control point T₁₃, i.e. the further the area of the composite part is from the control point, the lower the temperature. Basically, it is generally produced (if the electrodes apply a uniform pressure over their entire extension) more heating towards the centre of the part than towards the periphery because there is more heat dissipation at the periphery. Since the central point is the one chosen as reference, this point is the one that best follows the programme of temperatures and the other points, the further away from the centre, the lower their temperature.

Thus, in a real case, the more channels there are, the more uniform the temperature will be throughout the composite part. Of course, if for whatever reason it is wanted to apply a different profile of temperatures in each channel, it is also possible, but in the present context of curing parts of composite, it is normally wanted the temperature to be as uniform as possible.

With respect to Figure 4, it further shows a graphical representation of the average current flowing through each of the channels at every time during the curing time, for the case of several channels. Clearly, the current values I₂₁, I₂₂, I₂₃, I₂₄, I₂₅ in the channels furthest from the centre of the composite part are higher. In the case of one channel (state of the art) it is not possible to discriminate by areas. It is important to note that average current intensities over time are used because the instantaneous intensities range from maximum to zero over periods of time that may sometimes be in the order of milliseconds (or even microseconds or continuous pulse) and it would not make sense to represent them.

In the following, it is described a method for curing a composite part, which may be performed by the control device 11 described above. This method may comprise:
- obtaining, by the control device 11, a programme of temperatures to be applied to the composite part for curing thereof;
- obtaining, by the control device 11 and through the temperature capturing device 12, a distribution of temperatures on the surface of the composite part 14, at different times over the curing time;
- verifying the correspondence between the obtained distribution of temperatures on the surface of the composite part and the obtained programme of temperatures to be applied,
- depending on the result of the verification, regulating, at different times over the curing time, by the control device, the power supplied by the power source to at least one bundle of conductive fibres of the at least one bundle of conductive fibres that is electrically connected to the power source.

Two possible scenarios may be considered within this method.

In a first scenario, the system 10 for curing a composite part 14 may comprise a power source for each bundle, i.e. at least some of the conductive fibres 20 may be grouped in at least two bundles, each bundle being connected to a different power source. In this way, the presence of the interface device 13 is not necessary because the control device 11 actuates directly and independently on each of the sources of power, to regulate the power supply to the corresponding bundle. In this scenario, the method may comprise, to regulate, at different times over the curing time, by the control device 11, the power supplied by the power source 15 to at least one bundle of conductive fibres of the at least one bundle 21a to 21e of conductive fibres electrically connected to the power source:
- independently regulating, at different times over the curing time, by the control device, the power supplied by at least one power source to the bundle of conductive fibres to which it is electrically connected.

A second scenario is the one that has been considered throughout the present description, i.e. a scenario in which the system has a single power source 15, the interface device 13 and an actuator element for each bundle. In this scenario, the method may comprise, to regulate, at different times over the curing time, by the control device 11, the power supplied by the power source 15 to at least one bundle of conductive fibres of the at least one bundle 21a to 21e of conductive fibres electrically connected to the power source:
- regulating, at different times over the curing time, by the control device and through the interface device, the power supplied by the power source to at least one bundle of conductive fibres of the at least one bundle of conductive fibres that is electrically connected to the power source, by actuating on the corresponding actuator element, for example, by opening and closing the power supply to the bundle of conductive fibres, to generate duration controlled pulses (PWM).

On the other hand, two possible modes of operation may be considered.

On already known structures of composite with previous experience: since the path of the conductive fibres of each electrode along the composite part is known, it is possible to perform the curing at the programmed speed from the very first moment.

On a composite on which the details of the path of the conductive fibres are unknown: it is added, at the beginning of the method for curing a composite part, a step of calibrating the control device 11. This calibration may comprise:
- applying, by the control device, electrical stimuli sequentially to each bundle of conductive fibres electrically connected to the power source;
- identifying, by the control device and through the temperature capturing device, rises of temperature on the areas of the surface of the composite part under the influence of the conductive fibres that have received the power supply.

It is important to note that the system 10 for curing a composite part 14 may also operate inside a pressure vessel, such as a non-heating autoclave. A possible limitation is that the temperature capturing device (for example, a thermal imaging camera) either withstands the pressure or may view the composite part through an infrared-transparent window. This feature may be important for demanding applications such as aeronautical parts of composite.

Furthermore, in some examples, the control device 11 and the interface device 13 may be combined in a single equipment, such as, for example, in a computer system or an SBC (i.e., Single Board Computer) with the necessary cards.

In general, the described method may be applied for non-pressure curing or vacuum bag curing, or for the curing under pressure with the above mentioned limitation, and is applicable to the shipbuilding sector, manufacturing of wind power composite parts, aeronautical sector, automotive sector and playground furniture manufacturing among others.

Although only some particular embodiments and examples of the invention have been described herein, the skilled person will understand that other alternative embodiments and/or uses of the invention are possible, as well as obvious modifications and equivalent elements. The scope of the present invention should not be limited to specific embodiments, but it should be determined only by a proper reading of the appended claims.

## Claims

1. A method for curing a composite part (14), the composite being reinforced at least in part with conductive fibres (20) distributed throughout the composite part, at least some of the conductive fibres being grouped in a plurality of bundles (21a; 21b; 21c; 21d; 21e) electrically connected to a power source (15), the method comprising:
- obtaining, by a control device (11), a programme of temperatures to be applied to the composite part (14) for curing thereof;
- obtaining, by the control device (11) and through a temperature capturing device (12), a distribution of temperatures on the surface of the composite part (14) at different times over the curing time;
- verifying the correspondence between the obtained distribution of temperatures on the surface of the composite part (14) and the obtained programme of temperatures to be applied,
- depending on the result of the verification, independently regulating, at different times over the curing time, by the control device (11), the power supplied by the power source (15) through each of the bundles (21a; 21b; 21c; 21d; 21e) of conductive fibres (20).

2. The method according to claim 1, wherein each of the bundles of conductive fibres is connected to a different power source; and wherein independently regulating, at different times over the curing time, by the control device, the power supplied by the power source comprises:
- independently regulating, at different times over the curing time, by the control device, the power supplied by the power source to the bundle of conductive fibres to which it is electrically connected.

3. The method according to any of claims 1 or 2, wherein at least one bundle (21a; 21b; 21c; 21d; 21e) of conductive fibres (20) is electrically connected to the power source (15) and, through an actuator element (16a; 16b; 16c; 16d; 16e), to an interface device (13); and wherein regulating, at different times over the curing time, by the control device (11), the power supplied by the power source to at least one bundle of conductive fibres of the plurality of bundles of conductive fibres that is electrically connected to the power source, comprises:
- regulating, at different times over the curing time, by the control device (11) and through the interface device (13), the power supplied by the power source (15) to at least one bundle (21a; 21b; 21c; 21d; 21e) of conductive fibres (20) of the plurality of bundles of conductive fibres that is electrically connected to the power source, by actuating on the corresponding actuator element (16a; 16b; 16c; 16d; 16e).

4. The method according to claim 3, wherein regulating, at different times over the curing time, by the control device (11) and through the interface device (13), the power supplied by the power source (15) to at least one bundle (21a; 21b; 21c; 21d; 21e) of conductive fibres (20) of the plurality of bundles of conductive fibres (20) that is electrically connected to the power source, by actuating on the corresponding actuator element (16a; 16b; 16c; 16d; 16e), comprises:
- regulating, at different times over the curing time, by the control device (11) and through the interface device (13), the power supplied by the power source (15) to at least one bundle (21a; 21b; 21c; 21d; 21e) of conductive fibres (20) of the plurality of bundles of conductive fibres that is electrically connected to the power source, by actuating on the corresponding actuator element (16a; 16b; 16c; 16d; 16e), by opening and closing the power supply to the bundle of conductive fibres, to generate pulses of controlled duration.

5. The method according to any of claims 3 or 4, wherein an actuator element (16a; 16b; 16c; 16d; 16e) comprises at least one of the following elements:
- a transistor;
- an on-off element of high, medium or low frequency.

6. The method according to any of claims 1 to 5, comprising calibrating the control device (11) including:
- applying, by the control device (11), electrical stimuli sequentially to each bundle (21a, 21b, 21c, 21d, 21e) of conductive fibres (20) that is electrically connected to the power source (15);
- identifying, by the control device (11) and through the temperature capturing device (12), rises of temperature on the areas of the surface of the composite part (14) under the influence of the conductive fibres (20) that have received the power supply.

7. A computer program product comprising program instructions for causing a control device (11) to perform a method according to any of claims 1 to 6 for curing a composite part (14).

8. A control device (11) for controlling a system (10) for curing a composite part (14), the composite being at least partially reinforced with conductive fibres (20) distributed throughout the composite part, at least some of the conductive fibres being grouped in a plurality of bundles (21a, 21b, 21c, 21d, 21e) electrically connected to a power source (15), the control device comprising:
- means for obtaining a programme of temperatures to be applied to the composite part for curing thereof;
- means for obtaining, through a temperature capturing device (12), a distribution of temperatures on the surface of the composite part at different times over the curing time;
- means for verifying the correspondence between the obtained distribution of temperatures on the surface of the composite part and the obtained programme of temperatures to be applied;
- means for independently regulating, depending on the result of the verification, at different times over the curing time, the power supplied by the power source (15) through each of the bundles (21a; 21b; 21c; 21d; 21e) of conductive fibres (20).

9. A system (10) for curing a composite part (14), the composite being reinforced at least in part with conductive fibres (20) distributed throughout the composite part, at least some of the conductive fibres being grouped in a plurality of bundles (21a; 21b; 21c; 21d; 21e) electrically connected to a power source (15), the system comprising:
- a control device (11) according to claim 8;
- a temperature capturing device (12) for obtaining, at different times over the curing time, a distribution of temperatures on the surface of the composite part (14), this temperature capturing device being connected to the control device;
- a power source (15) for supplying power to each of the bundles (21a; 21b; 21c; 21d; 21e) of conductive fibres (20), the power source being connected to the control device (11).

10. The system (10) according to claim 9, comprising:
- an interface device (13) for regulating the power supply to each of the bundles (21a; 21b; 21c; 21d; 21e) of conductive fibres (20) that is electrically connected to the power source (15), the interface device being connected to the control device (11) and to the power source.

11. The system (10) according to claim 10, wherein the interface device (13) comprises a channel for each bundle (21a; 21b; 21c; 21d; 21e) of conductive fibres to which it is connected.

12. The system (10) according to claim 11, comprising an actuator element (16a; 16b; 16c; 16d; 16e) for each channel of the interface device (13), each actuator element being electrically connected to the power source (15) and to the corresponding channel of the interface device.

13. The system (10) according to any of claims 9 to 12, wherein the temperature capturing device (12) comprises at least one thermal imaging camera.

## Patentansprüche

1. Ein Verfahren zum Härten eines Verbundteils (14), wobei das Verbundteil zumindest teilweise mit leitfähigen Fasern (20) verstärkt ist, die über das gesamte Verbundteil verteilt sind, wobei zumindest einige der leitfähigen Fasern in einer Vielzahl von Bündeln (21a; 21b; 21c; 21d; 21e) gruppiert sind, die elektrisch mit einer Stromquelle (15) verbunden sind, wobei das Verfahren Folgendes umfasst:
- Erhalten eines Programms von Temperaturen, die auf das Verbundteil (14) zum Aushärten desselben anzuwenden sind, durch eine Steuervorrichtung (11);
- Erhalten einer Verteilung von Temperaturen auf der Oberfläche des Verbundteils (14) zu verschiedenen Zeiten über die Aushärtungszeit durch die Steuervorrichtung (11) und durch eine Temperaturerfassungsvorrichtung (12);
- Überprüfen der Übereinstimmung zwischen der erhaltenen Verteilung von Temperaturen auf der Oberfläche des Verbundteils (14) und dem erhaltenen Programm der anzuwendenden Temperaturen,
- in Abhängigkeit von dem Ergebnis der Überprüfung, unabhängiges Regeln des von der Stromquelle (15) durch jedes der Bündel (21a; 21b; 21c; 21d; 21e) von leitfähigen Fasern (20) gelieferten Stroms zu verschiedenen Zeitpunkten über die Aushärtungszeit durch die Steuervorrichtung (11).

2. Das Verfahren nach Anspruch 1, wobei jedes der Bündel von leitfähigen Fasern mit einer anderen Stromquelle verbunden ist; und wobei das unabhängige Regeln des von der Stromquelle gelieferten Stroms zu verschiedenen Zeiten über die Aushärtungszeit durch die Steuervorrichtung Folgendes umfasst:
- unabhängiges Regeln, durch die Steuervorrichtung, des von der Stromquelle an das Bündel leitfähiger Fasern, mit dem sie elektrisch verbunden ist, gelieferten Stroms zu unterschiedlichen Zeiten über die Aushärtungszeit.

3. Das Verfahren nach einem der Ansprüche 1 oder 2, wobei mindestens ein Bündel (21a; 21b; 21c; 21d; 21e) von leitfähigen Fasern (20) elektrisch mit der Stromquelle (15) und über ein Aktorelement (16a; 16b; 16c; 16d; 16e) mit einer Schnittstellenvorrichtung (13) verbunden ist; und wobei das Regeln des von der Stromquelle an mindestens ein Bündel von leitfähigen Fasern der Vielzahl von Bündeln von leitfähigen Fasern, das elektrisch mit der Stromquelle verbunden ist, gelieferten Stroms zu unterschiedlichen Zeiten über die Aushärtungszeit durch die Steuervorrichtung (11) Folgendes umfasst:
- Regeln des von der Stromquelle (15) an mindestens ein Bündel (21a; 21b; 21c; 21d; 21e) von leitfähigen Fasern (20) der Vielzahl von Bündeln von leitfähigen Fasern, das elektrisch mit der Stromquelle verbunden ist, gelieferten Stroms durch die Steuervorrichtung (11) und durch die Schnittstellenvorrichtung (13) zu unterschiedlichen Zeitpunkten über die Aushärtungszeit durch Betätigen des entsprechenden Aktorelements (16a; 16b; 16c; 16d; 16e).

4. Das Verfahren nach Anspruch 3, wobei das Regeln des von der Stromquelle (15) an mindestens ein Bündel (21a; 21b; 21c; 21d; 21e) von leitfähigen Fasern (20) der Vielzahl von Bündeln von leitfähigen Fasern (20), das elektrisch mit der Stromquelle verbunden ist, gelieferten Stroms durch die Steuervorrichtung (11) und durch die Schnittstellenvorrichtung (13) zu verschiedenen Zeiten über die Aushärtungszeit durch Betätigen des entsprechenden Aktorelements (16a; 16b; 16c; 16d; 16e) Folgendes umfasst:
- Regeln, zu verschiedenen Zeiten über die Aushärtungszeit, durch die Steuervorrichtung (11) und durch die Schnittstellenvorrichtung (13), des von der Stromquelle (15) an mindestens ein Bündel (21a; 21b; 21c; 21d; 21e) von leitfähigen Fasern (20) der Vielzahl von Bündeln von leitfähigen Fasern, das elektrisch mit der Stromquelle verbunden ist, gelieferten Stroms durch Betätigen des entsprechenden Aktorelements (16a; 16b; 16c; 16d; 16e), durch Öffnen und Schließen der Stromversorgung des Bündels von leitfähigen Fasern, um Impulse von kontrollierter Dauer zu erzeugen.

5. Das Verfahren nach einem der Ansprüche 3 oder 4, wobei ein Aktorelement (16a; 16b; 16c; 16d; 16e) mindestens eines der folgenden Elemente umfasst:
- einen Transistor;
- ein Ein-Aus-Glied mit hoher, mittlerer oder niedriger Frequenz.

6. Das Verfahren nach einem der Ansprüche 1 bis 5, umfassend das Kalibrieren der Steuervorrichtung (11), einschließlich:
- Anwenden von elektrischen Reizen durch die Steuervorrichtung (11) nacheinander auf jedes Bündel (21a, 21b, 21c, 21d, 21e) von leitfähigen Fasern (20), das elektrisch mit der Stromquelle (15) verbunden ist;
- Identifizieren von Temperaturanstiegen an den Bereichen der Oberfläche des Verbundteils (14) unter dem Einfluss der leitfähigen Fasern (20), die die Stromversorgung erhalten haben, durch die Steuervorrichtung (11) und durch die Temperaturerfassungsvorrichtung (12).

7. Ein Computerprogrammprodukt, das Programmanweisungen umfasst, um eine Steuervorrichtung (11) zu veranlassen, ein Verfahren nach einem der Ansprüche 1 bis 6 zum Härten eines Verbundteils (14) durchzuführen.

8. Eine Steuervorrichtung (11) zum Steuern eines Systems (10) zum Härten eines Verbundteils (14), wobei der Verbund mindestens teilweise mit leitfähigen Fasern (20) verstärkt ist, die über das gesamte Verbundteil verteilt sind, wobei mindestens einige der leitfähigen Fasern in einer Vielzahl von Bündeln (21a, 21b, 21c, 21d, 21e) gruppiert sind, die elektrisch mit einer Stromquelle (15) verbunden sind, wobei die Steuervorrichtung Folgendes umfasst:
- ein Mittel zum Erhalten eines Programms von Temperaturen, die auf das Verbundteil anzuwenden sind, um es auszuhärten;
- ein Mittel zum Erhalten einer Verteilung von Temperaturen auf der Oberfläche des Verbundteils zu verschiedenen Zeiten über die Aushärtungszeit durch eine Temperaturerfassungsvorrichtung (12);
- ein Mittel zum Überprüfen der Übereinstimmung zwischen der erhaltenen Verteilung der Temperaturen auf der Oberfläche des Verbundteils und dem erhaltenen Programm von anzuwendenden Temperaturen;
- ein Mittel zum unabhängigen Regeln des von der Stromquelle (15) durch jedes der Bündel (21a; 21b; 21c; 21d; 21e) von leitfähigen Fasern (20) gelieferten Stroms in Abhängigkeit von dem Ergebnis der Überprüfung zu verschiedenen Zeitpunkten über die Aushärtungszeit.

9. Ein System (10) zum Härten eines Verbundteils (14), wobei der Verbund mindestens teilweise mit leitfähigen Fasern (20) verstärkt ist, die über das gesamte Verbundteil verteilt sind, wobei mindestens einige der leitfähigen Fasern in einer Vielzahl von Bündeln (21a; 21b; 21c; 21d; 21e) gruppiert sind, die elektrisch mit einer Stromquelle (15) verbunden sind, wobei das System Folgendes umfasst:
- eine Steuervorrichtung (11) nach Anspruch 8;
- eine Temperaturerfassungsvorrichtung (12), um zu verschiedenen Zeiten über die Aushärtungszeit eine Verteilung von Temperaturen auf der Oberfläche des Verbundteils (14) zu erhalten, wobei diese Temperaturerfassungsvorrichtung mit der Steuervorrichtung verbunden ist;
- eine Stromquelle (15) zur Versorgung von Strom zu jedem der Bündel (21a; 21b; 21c; 21d; 21e) von leitfähigen Fasern (20), wobei die Stromquelle mit der Steuervorrichtung (11) verbunden ist.

10. Das System (10) nach Anspruch 9, umfassend:
- eine Schnittstelleneinrichtung (13) zum Regeln der Stromversorgung jedes der Bündel (21a; 21b; 21c; 21d; 21e) von leitfähigen Fasern (20), die elektrisch mit der Stromquelle (15) verbunden ist, wobei die Schnittstelleneinrichtung mit der Steuervorrichtung (11) und der Stromquelle verbunden ist.

11. Das System (10) nach Anspruch 10, wobei die Schnittstellenvorrichtung (13) einen Kanal für jedes Bündel (21a; 21b; 21c; 21d; 21e) von leitfähigen Fasern umfasst, mit dem sie verbunden ist.

12. Das System (10) nach Anspruch 11, umfassend ein Aktorelement (16a; 16b; 16c; 16d; 16e) für jeden Kanal der Schnittstellenvorrichtung (13), wobei jedes Aktorelement elektrisch mit der Stromquelle (15) und dem entsprechenden Kanal der Schnittstellenvorrichtung verbunden ist.

13. Das System (10) nach einem der Ansprüche 9 bis 12, wobei die Temperaturerfassungsvorrichtung (12) mindestens eine Wärmebildkamera umfasst.

## Revendications

1. Un procédé de durcissement d'une pièce composite (14), le composite étant renforcé au moins en partie par des fibres conductrices (20) réparties dans toute la pièce composite, au moins certaines des fibres conductrices étant regroupées en une pluralité de faisceaux (21a ; 21b ; 21c ; 21d ; 21e) connectés électriquement à une source d'alimentation (15), le procédé comprenant :
- obtenir, par un dispositif de commande (11), un programme de températures à appliquer à la pièce composite (14) pour son durcissement ;
- obtenir, par le dispositif de commande (11) et à travers un dispositif de capture de température (12), une distribution de températures sur la surface de la pièce composite (14) à différents moments au cours du temps de durcissement ;
- vérifier la correspondance entre la distribution de températures obtenue sur la surface de la pièce composite (14) et le programme de températures à appliquer obtenu,
- en fonction du résultat de la vérification, réguler indépendamment, à différents moments au cours du temps de durcissement, par le dispositif de commande (11), le courant fourni par la source d'alimentation (15) à travers chacun des faisceaux (21a ; 21b ; 21c ; 21d ; 21e) de fibres conductrices (20).

2. Le procédé selon la revendication 1, dans lequel chacun des faisceaux de fibres conductrices est connecté à une source d'alimentation différente ; et dans lequel la régulation indépendante, à différents moments au cours du temps de durcissement, par le dispositif de commande, du courant fourni par la source d'alimentation comprend :
- réguler indépendamment, à différents moments au cours du temps de durcissement, par le dispositif de commande, le courant fourni par la source d'alimentation au faisceau de fibres conductrices auquel elle est électriquement connectée.

3. Le procédé selon l'une quelconque des revendications 1 ou 2, dans lequel au moins un faisceau (21a ; 21b ; 21c ; 21d ; 21e) de fibres conductrices (20) est électriquement connecté à la source d'alimentation (15) et, par l'intermédiaire d'un élément d'actionneur (16a ; 16b ; 16c ; 16d ; 16e), à un dispositif d'interface (13) ; et dans lequel la régulation, à différents moments au cours du temps de durcissement, par le dispositif de commande (11), du courant fourni par la source d'alimentation à au moins un faisceau de fibres conductrices de la pluralité de faisceaux de fibres conductrices qui est électriquement connecté à la source d'alimentation, comprend :
- réguler, à différents moments au cours du temps de durcissement, par le dispositif de commande (11) et à travers le dispositif d'interface (13), le courant fourni par la source d'alimentation (15) à au moins un faisceau (21a ; 21b ; 21c ; 21d ; 21e) de fibres conductrices (20) de la pluralité de faisceaux de fibres conductrices qui est électriquement connecté à la source d'alimentation, en actionnant l'élément d'actionneur correspondant (16a ; 16b ; 16c ; 16d ; 16e).

4. Le procédé selon la revendication 3, dans lequel la régulation, à différents moments au cours du temps de durcissement, par le dispositif de commande (11) et par l'intermédiaire du dispositif d'interface (13), du courant fourni par la source d'alimentation (15) à au moins un faisceau (21a ; 21b ; 21c ; 21d ; 21e) de fibres conductrices (20) de la pluralité de faisceaux de fibres conductrices (20) qui est électriquement connecté à la source d'alimentation, en actionnant l'élément d'actionneur correspondant (16a ; 16b ; 16c ; 16d ; 16e), comprend :
- réguler, à différents moments au cours du temps de durcissement, par le dispositif de commande (11) et à travers le dispositif d'interface (13), le courant fourni par la source d'alimentation (15) à au moins un faisceau (21a ; 21b ; 21c ; 21d ; 21e) de fibres conductrices (20) de la pluralité de faisceaux de fibres conductrices qui est électriquement connecté à la source d'alimentation, en actionnant l'élément d'actionneur correspondant (16a ; 16b ; 16c ; 16d ; 16e), en ouvrant et en fermant l'alimentation en courant du faisceau de fibres conductrices, pour générer des impulsions de durée contrôlée.

5. Le procédé selon l'une quelconque des revendications 3 ou 4, dans lequel un élément d'actionneur (16a ; 16b ; 16c ; 16d ; 16e) comprend au moins l'un des éléments suivants :
- un transistor ;
- un élément marche-arrêt de haute, moyenne ou basse fréquence.

6. Le procédé selon l'une quelconque des revendications 1 à 5, comprenant l'étalonnage du dispositif de commande (11) comprenant:
- appliquer, par le dispositif de commande (11), des stimuli électriques séquentiellement à chaque faisceau (21a, 21b, 21c, 21d, 21e) de fibres conductrices (20) qui est électriquement connecté à la source d'alimentation (15) ;
- identifier, par le dispositif de commande (11) et à travers le dispositif de capture de température (12), des élévations de température sur les zones de la surface de la pièce composite (14) sous l'influence des fibres conductrices (20) qui ont reçu l'alimentation électrique.

7. Un produit de programme informatique comprenant des instructions de programme pour amener un dispositif de commande (11) à exécuter un procédé selon l'une quelconque des revendications 1 à 6 pour durcir une pièce composite (14).

8. Un dispositif de commande (11) pour commander un système (10) de durcissement d'une pièce composite (14), le composite étant au moins partiellement renforcé par des fibres conductrices (20) réparties dans toute la pièce composite, au moins certaines des fibres conductrices étant regroupées en une pluralité de faisceaux (21a, 21b, 21c, 21d, 21e) connectés électriquement à une source d'alimentation (15), le dispositif de commande comprenant :
- un moyen pour obtenir un programme de températures à appliquer à la pièce composite pour son durcissement ;
- un moyen pour obtenir, à travers un dispositif de capture de température (12), une distribution de températures sur la surface de la pièce composite à différents moments au cours du temps de durcissement ;
- un moyen de vérification de la correspondance entre la distribution de températures obtenue sur la surface de la pièce composite et le programme de températures à appliquer obtenu ;
- un moyen pour réguler indépendamment, en fonction du résultat de la vérification, à différents moments au cours du temps de durcissement, le courant fourni par la source d'alimentation (15) à travers chacun des faisceaux (21a ; 21b ; 21c ; 21d ; 21e) de fibres conductrices (20).

9. Un système (10) pour durcir une pièce composite (14), le composite étant renforcé au moins en partie par des fibres conductrices (20) réparties dans toute la pièce composite, au moins certaines des fibres conductrices étant regroupées en une pluralité de faisceaux (21a ; 21b ; 21c ; 21d ; 21e) connectés électriquement à une source d'alimentation (15), le système comprenant :
- un dispositif de commande (11) selon la revendication 8 ;
- un dispositif de capture de température (12) pour obtenir, à différents moments au cours du temps de durcissement, une distribution de températures sur la surface de la pièce composite (14), ce dispositif de capture de température étant connecté au dispositif de commande ;
- une source d'alimentation (15) pour alimenter en courant chacun des faisceaux (21a ; 21b ; 21c ; 21d ; 21e) de fibres conductrices (20), la source d'alimentation étant connectée au dispositif de commande (11).

10. Le système (10) selon la revendication 9, comprenant :
- un dispositif d'interface (13) pour réguler l'alimentation en courant de chacun des faisceaux (21a ; 21b ; 21c ; 21d ; 21e) de fibres conductrices (20) qui est électriquement connecté à la source d'alimentation (15), le dispositif d'interface étant connecté au dispositif de commande (11) et à la source d'alimentation.

11. Le système (10) selon la revendication 10, dans lequel le dispositif d'interface (13) comprend un canal pour chaque faisceau (21a ; 21b ; 21c ; 21d ; 21e) de fibres conductrices auquel il est connecté.

12. Le système (10) selon la revendication 11, comprenant un élément d'actionneur (16a ; 16b ; 16c ; 16d ; 16e) pour chaque canal du dispositif d'interface (13), chaque élément d'actionneur étant électriquement connecté à la source d'alimentation (15) et au canal correspondant du dispositif d'interface.

13. Le système (10) selon l'une quelconque des revendications 9 à 12, dans lequel le dispositif de capture de température (12) comprend au moins une caméra d'imagerie thermique.
